# EUROPÄISCHE PATENTSCHRIFT

(11) **EP 0 322 056 B1**
(45) Veröffentlichungstag und Bekanntmachung des Hinweises auf die Patenterteilung: **21.04.1993**
(21) Anmeldenummer: 88202930.9
(22) Anmeldetag: 19.12.1988
(51) Int. Cl.: G11B 15/675

(54) **Aufzeichnungs-und/oder Wiedergabegerät für einen bandförmigen Aufzeichnungsträger**
Recording and/or reproducing apparatus for a tape-like record carrier
Appareil d'enregistrement et/ou de reproduction pour un support d'information en forme de bande

(30) Priorität: 23.12.1987 AT 3417/87
(43) Veröffentlichungstag der Anmeldung: 28.06.1989
(73) Patentinhaber: Philips Electronics N.V., 5621 BA Eindhoven (NL)
(72) Erfinder: Kletzl, Franz, NL-5656 AA Eindhoven (NL); Schafler, Winfried, NL-5656 AA Eindhoven (NL)
(74) Vertreter: Van Weele, Paul Johannes Frits

(56) Entgegenhaltungen:
- EP-A- 0 196 623
- EP-A- 0 203 784
- FR-A- 2 591 378
- GB-A- 1 162 682
- GB-A- 1 578 103
- GB-A- 2 093 258

## Beschreibung

Die Erfindung bezieht sich auf ein Aufzeichnungs- und/oder Wiedergabegerät für einen bandförmigen Aufzeichnungsträger, der in einer in das Gerät einsetzbaren Kassette mit zwei nebeneinanderliegenden, rotierend antreibbaren Wickelkernen für denselben untergebracht ist, mit rotierend antreibbaren, durch mindestens eine erste Hauptwand der Kassette hindurch mit den Wickelkernen in Antriebsverbindung bringbaren Wickeldornen zum Antreiben der Wickelkerne und mit einer um eine Schwenkachse verschwenkbaren, im wesentlichen schachtförmig ausgebildeten Kassettenaufnahme, die zwischen einer Ladeposition, in der eine Kassette mit einer ersten Seitenwand voran in Schachtrichtung in die Kassettenaufnahme bis in eine durch mindestens einen an der Kassettenaufnahme vorgesehenen Begrenzungsanschlag festgelegte Einführlage einführbar ist, und einer Betriebsposition verschwenkbar ist, in der eine in die Kassettenaufnahme eingeführte Kassette eine Betriebslage einnimmt, in der die Wickeldorne mit den Wickelkernen in Antriebsverbindung stehen, sowie mit mindestens einer unter der Wirkung einer Feder stehenden Andruckeinrichtung, die bei in ihrer Ladeposition befindlicher Kassettenaufnahme sich außerhalb des Einführbereiches einer Kassette in die Kassettenaufnahme befindet und die beim Verschwenken der Kassettenaufnahme in ihre Betriebsposition mit einer in dieselbe eingeführten Kassette in Wirkverbindung tritt, wobei die Andruckeinrichtung mit mindestens einer an ihr vorgesehenen Angriffsstelle an einer zu dieser korrespondierenden, im Bereich der der ersten Seitenwand gegenüberliegenden Seitenwand befindlichen Angriffsstelle an der Kassette angreift und die Kassette unter der Wirkung der auf die Andruckeinrichtung einwirkenden Feder in Schachtrichtung zu dem Begrenzungsanschlag hindrückt.

Ein solches Gerät ist aus der AT-PS 298.104 bekannt. Bei diesem bekannten Gerät ist die Andruckeinrichtung feststehend innerhalb des Gerätes angeordnet, wobei sie beim Verschwenken einer in die Kassettenaufnahme eingeführten Kassette in ihre Betriebslage, erst unmittelbar bevor die Kassette ihre Betriebslage erreicht, mit derselben in Wirkverbindung tritt. Wenn bei diesem bekannten Gerät eine Kassette vom Benützer nicht einwandfrei bis in die hier durch zwei Begrenzungsanschläge an der Kassettenaufnahme festgelegte Einführlage in die Kassettenaufnahme eingeführt wird, was beispielsweise bei ungünstigen Reibungsverhältnissen durch Verklemmen der Kassette eintreten kann, kann es beim Verschwenken der nicht einwandfrei eingeführten Kassette in ihre Betriebslage zu Störungen beim Eintauchen der zum Antreiben der beiden Wickelkerne vorgesehenen Wickeldorne in die Kassette kommen, weil dieses Eintauchen der beiden Wickeldorne schon zu einem Zeitpunkt erfolgt, zu dem die Andruckeinrichtung noch nicht mit der Kassette zusammenwirkt und daher die Kassette noch nicht in ihre Einführlage in der Kassettenaufnahme gedrückt und in derselben gehalten wird. Wenn eine Kassette nicht einwandfrei in ihre Einführlage in der Kassettenaufnahme eingeführt ist, kann sogar der Fall eintreten, daß die Kassette mit ihrer ersten Hauptwand, durch die die Wickeldorne hindurch mit den Wickelkernen in Antriebsverbindung bringbar sind, gegen die Wickeldorne stößt, wobei sie dann nicht in ihre Betriebslage verschwenkt und somit das Gerät nicht in Betrieb genommen werden kann. Weiters tritt bei dem bekannten Gerät die feststehend angeordnete Andruckeinrichtung abrupt mit einer in die Kassettenaufnahme eingeführten Kassette in Wirkverbindung, was bei der händischen Verstellung der Kassettenaufnahme vom Benützer als störend empfunden werden kann, da im Bewegungsablauf plötzlich ein Widerstand spürbar wird, und was auch zu einem erhöhten Verschleiß von sowohl der Andruckeinrichtung als auch der Kassette führen kann.

Die Erfindung hat sich zur Aufgabe gestellt, die vorstehend angeführten Schwierigkeiten zu vermeiden und ein Gerät zu schaffen, bei dem eine in die Kassettenaufnahme eingeführte Kassette bereits zu einem relativ frühen Zeitpunkt des Schwenkvorganges der Kassettenaufnahme in ihre Betriebsposition mit Sicherheit in ihre Einführlage in der Kassettenaufnahme gedrückt und in derselben gehalten wird und bei dem ein abruptes Angreifen der Andruckeinrichtung an der Kassette vermieden ist. Hiefür ist die Erfindung dadurch gekennzeichnet, daß die Andruckeinrichtung an einem um eine Schwenkachse zwischen einer Ausgangsposition und einer Arbeitsposition verschwenkbaren Träger angeordnet ist, daß der Träger mit der Kassettenaufnahme zum zumindest teilweise gemeinsamen Verschwenken der beiden über mindestens eine Kopplungseinrichtung gekoppelt ist und daß die Schwenkachse des Trägers gegenüber der Schwenkachse der Kassettenaufnahme parallel versetzt angeordnet ist, wobei der Abstand der an der Andruckeinrichtung vorgesehenen Angriffsstelle von der Schwenkachse der Kassettenaufnahme einerseits bei in ihrer Ladeposition befindlicher Kassettenaufnahme und dabei in seiner Ausgangsposition befindlichem Träger größer und andererseits bei in ihrer Betriebsposition befindlicher Kassettenaufnahme ohne in sie eingeführter Kassette und dabei in seiner Arbeitsposition befindlichem Träger kleiner ist als der Abstand der an einer in die Kassettenaufnahme eingeführten Kassette befindlichen korrespondierenden Angriffsstelle von der Schwenkachse der Kassettenaufnahme und beim Verschwenken des Trägers von seiner Ausgangsposition in seine Arbeitsposition die an der Andruckeinrichtung vorgesehene Angriffsstelle sich zu der an einer in die Kassettenaufnahme eingeführten Kassette befindlichen korrespondierenden Angriffsstelle hin bewegt und dabei an derselben zum Angreifen kommt. Durch das Anordnen der Andruckeinrichtung an dem verschwenkbaren Träger und durch das wie angeführte gegeneinander Versetzten der Schwenkachsen der Kassettenaufnahme und des Trägers wird beim Verschwenken der beiden in ihre Betriebs- bzw. Arbeitsposition eine Relativbewegung zwischen der am Träger angebrachten Andruckeinrichtung und einer in die Kassettenaufnahme eingeführten Kassette erreicht, der zufolge die beim Verschwenken des Trägers mitbewegte Andruckeinrichtung bereits zu einem relativ frühen Zeitpunkt des Schwenkvorganges mit der Kassette in Wirkverbindung tritt, wodurch die Kassette bereits relativ früh, bevor noch der Schwenkvorgang beendet ist, sicher in ihre Einführlage in der Kassettenaufnahme gedrückt und in derselben gehalten wird, so daß die Wickeldorne mit Sicherheit ohne Schwierigkeiten in die ordnungsgemäß in ihrer Einführlage befindliche Kassette eintauchen können. Weiters ist durch die erfindungsgemäßen Maßnahmen erreicht, daß die Andruckeinrichtung kontinuierlich an eine in die Kassettenaufnahme eingeführte Kassette heranbewegt wird und dabei sanft mit dieser in Wirkverbindung tritt, wobei die von der auf die Andruckeinrichtung einwirkenden Feder auf die Kassette aufgebrachte Kraft kontinuierlich zunimmt, so daß ein gleichmäßiger Bewegungsablauf ohne von einem Benützer spürbare störende Rückwirkungen und ein besonders geringer Verschleiß für die Andruckeinrichtung und die Kassette erreicht wird.

An dieser Stelle sei erwähnt, daß aus der DE-PS 26 36 512 ein Gerät bekannt ist, bei dem mit einer verschwenkbaren Kassettenaufnahme über eine durch eine Stift-Schlitz-Verbindung gebildete Kopplungseinrichtung ein um eine zur Schwenkachse der Kassettenaufnahme parallel versetzt angeordnete Schwenkachse verschwenkbarer, hier zum Öffnen von Kassettendeckeln einer in die Kassettenaufnahme eingeführten Kassette ausgebildeter Träger gekoppelt ist. Dieses Gerät weist keine Andruckeinrichtung zum Hindrücken einer in die Kassettenaufnahme eingeführten Kassette zu mindestens einem an der Kassettenaufnahme vorgesehenen Begrenzungsanschlag auf. Bei diesem bekannten Gerät sind vielmehr an dem Träger zwei feststehende Stifte angeordnet, mit denen beim Verschwenken der Kassettenaufnahme in ihre Betriebsposition durch die hiebei auftretende, durch das gegeneinander Versetzen der Schwenkachsen der Kassettenaufnahme und des Trägers erzielte Relativbewegung, wie erwähnt, zwei Kassettendeckel einer in die Kassettenaufnahme eingeführten Kassette geöffnet werden. Dagegen ist beim erfindungsgemäßen Gerät am Träger mindestens eine unter der Wirkung einer Feder stehende Andruckeinrichtung angeordnet, die zum Hindrücken einer in die Kassettenaufnahme eingeführten Kassette zu mindestens einem an der Kassettenaufnahme vorgesehenen Begrenzungsanschlag dient. Somit handelt es sich bei dem aus der DE-PS 26 36 512 bekannten Gerät um ein sowohl hinsichtlich der konstruktiven Merkmale als auch in funktioneller Hinsicht gegenüber einem erfindungsgemäßen Gerät unterschiedliches Gerät, bei dem demgemäß die erfindungsgemäßen Vorteile nicht gegeben beziehungsweise erreichbar sind.

Bei einem erfindungsgemäßen Gerät kann beispielsweise der Träger zu der ersten Hauptwand einer in die Kassettenaufnahme eingeführten Kassette benachbart angeordnet sein. Auch können zwei beispielsweise im wesentlichen L-förmige Träger für je eine Andruckeinrichtung vorgesehen sein, von denen je einer zu einer der beiden zu der ersten Seitenwand senkrecht verlaufenden Seitenwände benachbart angeordnet ist. Als vorteilhaft hat sich aber erwiesen, wenn der Träger im wesentlichen zu der der ersten Hauptwand gegenüberliegenden Hauptwand einer in die Kassettenaufnahme eingeführten Kassette benachbart angeordnet ist. Auf diese Weise ist eine einfache und raumsparende Ausbildung erreicht.

In diesem Zusammenhang hat sich als besonders vorteilhaft erwiesen, wenn der Träger im wesentlichen plattenförmig ausgebildet ist und einen Verschlußdeckel für einen die Kassettenaufnahme in ihrer Betriebsposition aufnehmenden Aufnahmeraum bildet. Hiedurch erfüllt der Träger nicht nur seine Trägerfunktion für die Andruckeinrichtung, sondern auch eine zusätzliche Verschlußfunktion für einen Aufnahmeraum für die Kassettenaufnahme in ihrer Betriebsposition, so daß sich ein separater Verschlußdeckel für einen solchen Aufnahmeraum erübrigt.

Im Hinblick auf die Anordnung der Schwenkachse des Trägers hat sich als vorteilhaft erwiesen, wenn die Schwenkachse des Trägers einen größeren Normalabstand von der ersten Hauptwand einer in die Kassettenaufnahme eingeführten Kassette als die an der Andruckeinrichtung vorgesehene Angriffsstelle aufweist und zum Festhalten des Trägers in seiner Arbeitsposition eine lösbare Festhalteeinrichtung vorgesehen ist. Auf diese Weise ist erreicht, daß bei an einer in die Kassettenaufnahme eingeführten Kassette angreifender Andruckeinrichtung die in Reaktion auf die Federkraft der auf die Andruckeinrichtung einwirkenden Feder an der Andruckeinrichtung auftretende Reaktionskraft an dem Träger ein Drehmoment zur Folge hat, das bestrebt ist, den Träger von seiner Arbeitsposition in seine Ausgangsposition zu verschwenken. Es wird somit vorteilhafterweise die auf die Andruckeinrichtung einwirkende Feder nicht nur zum Liefern der Kraft der Andruckeinrichtung zum Hindrücken einer in die Kassettenaufnahme eingeführten Kassette zu mindestens einem an der Kassettenaufnahme vorgesehenen Begrenzungsanschlag, sondern zusätzlich auch zum Liefern einer Verstellkraft zum Verstellen des Trägers aus seiner Arbeitsposition in seine Ausgangsposition ausgenützt, wodurch das Verschwenken der Kassettenaufnahme in ihre Ladeposition und des Trägers in seine Ausgangsposition von dieser Feder unterstützt wird.

Bei einem solchen Gerät kann als Festhalteeinrichtung beispielsweise eine lösbare Rasteinrichtung oder ein verschwenkbarer Verriegelungshebel vorgesehen sein. Als besonders vorteilhaft hat sich aber erwiesen, wenn die Festhalteeinrichtung für den Träger durch einen senkrecht zur Schwenkachse des Trägers verstellbaren Verriegelungsschieber gebildet ist, der unter der Wirkung einer Feder in seine Verriegelungslage verstellbar ist. Hiedurch ist eine besonders einfache und betriebssichere Ausbildung erreicht.

Die an dem Träger angeordnete Andruckeinrichtung kann beispielsweise so wie bei dem aus der eingangs erwähnten AT-PS 298.104 bekannten Gerät aus einem an einer abgewinkelten Blattfeder angebrachten, im wesentlichen halbkugelförmigen Andrucknocken bestehen, wobei die Blattfeder am Träger befestigt ist. Auch kann die Andruckeinrichtung durch einen am Träger verschwenkbar gelagerten Andruckhebel gebildet sein. Als besonders vorteilhaft hat sich aber erwiesen, wenn die Andruckeinrichtung durch einen am Träger senkrecht zu dessen Schwenkachse verschiebbar geführten Andruckschieber gebildet ist. Hiedurch wird eine besonders einfache und betriebssichere Ausbildung erreicht, bei der die Andruckeinrichtung vorteilhafterweise über einen relativ großen Hubbereich verstellbar ist.

Im Zusammenhang mit einer genauen Positionierung einer in ihrer Betriebslage befindlichen Kassette hat sich als vorteilhaft erwiesen, wenn bei in seiner Arbeitsposition befindlichem Träger mit der Andruckeinrichtung eine in ihrer Betriebslage befindliche Kassette an mindestens einen geräteseitigen, im Bereich der ersten Seitenwand an der Kassette angreifenden stationären Positionieranschlag angelegt gehalten ist, wobei die Kassette entgegen der Schachtrichtung aus ihrer Einführlage in der Kassettenaufnahme verstellt und dabei von dem Begrenzungsanschlag an der Kassettenaufnahme abgehoben in ihrer Betriebslage gehalten ist. Auf diese Weise ist erreicht, daß die Andruckeinrichtung nicht nur dafür sorgt, daß eine in die Kassettenaufnahme eingeführte Kassette beim Verschwenken der Kassettenaufnahme in ihre Betriebsposition sicher in ihre Einführlage in der Kassettenaufnahme gedrückt und in derselben während des Verschwenkens der Kassettenaufnahme gehalten wird, sondern daß die Andruckeinrichtung zusätzlich auch dafür sorgt, daß die Kassette anschließend an das Verschwenken der Kassettenaufnahme eine genau definierte Betriebslage einnimmt, die durch das Zusammenwirken ihrer ersten Seitenwand mit dem geräteseitigen stationären Positionieranschlag festgelegt ist, wie dies bei derartigen Geräten zur genauen Positionierung einer Kassette vielfach üblich ist.

Die an dem Träger angeordnete Andruckeinrichtung kann so ausgebildet sein, daß sie mit ihrer an der korrespondierenden Angriffsstelle an einer in die Kassettenaufnahme eingeführten Kassette angreifenden Angriffsstelle eine ausschließlich in Schachtrichtung ausgerichtete Kraft auf die der ersten Seitenwand gegenüberliegende Seitenwand ausübt, wie dies bei dem aus der eingangs erwähnten AT-PS 298.104 bekannten Gerät der Fall ist. Im Zusammenhang mit einer genauen Positionierung einer in ihrer Betriebslage befindlichen Kassette hat sich aber als vorteilhaft erwiesen, wenn die an einer in die Kassettenaufnahme eingeführten Kassette befindliche korrespondierende Angriffsstelle in dem Kantenbereich der Kassette liegt, in den die der ersten Seitenwand gegenüberliegende Seitenwand und die der ersten Hauptwand gegenüberliegende Hauptwand mündet, und die an der Andruckeinrichtung vorgesehene Angriffsstelle an einer gegenüber der in diesen Kantenbereich mündenden Seitenwand und gegenüber der in diesen Kantenbereich mündenden Hauptwand geneigt verlaufenden Angriffsfläche der Andruckeinrichtung vorgesehen ist und bei in seiner Arbeitsposition befindlichem Träger mit der Andruckeinrichtung eine in ihrer Betriebslage befindliche Kassette in dem an die der ersten Seitenwand gegenüberliegende Seitenwand angrenzenden Bereich ihrer ersten Hauptwand an mindestens eine geräteseitige stationäre Auflagefläche angelegt gehalten ist. Auf diese Weise ist erreicht, daß die Andruckeinrichtung nicht nur dafür sorgt, daß eine in die Kassettenaufnahme eingeführte Kassette beim Verschwenken der Kassettenaufnahme in ihre Betriebsposition sicher in ihre Einführlage in der Kassettenaufnahme gedrückt und in derselben während des Verschwenkens der Kassettenaufnahme gehalten wird, sondern daß die Andruckeinrichtung nach dem Verschwenken der Kassettenaufnahme zusätzlich auch dafür sorgt, daß die in ihrer Betriebslage befindliche Kassette mit ihrem an die der ersten Seitenwand gegenüberliegenden Seitenwand angrenzenden Bereich ihrer ersten Hauptwand mit Sicherheit genau positioniert wird, wie dies bei derartigen Geräten zur genauen Positionierung einer Kassette ebenfalls vielfach üblich ist. Weiters ist dadurch erreicht, daß keine separate Niederhalteeinrichtung, wie beispielsweise mindestens eine an der Kassettenaufnahme angebrachte, gegen die der ersten Hauptwand gegenüberliegende Hauptwand drückende Blattfeder, zum Andrücken der Kassette an die stationäre Auflagefläche erforderlich ist, was im Hinblick auf eine einfache und preisgünstige Ausbildung vorteilhaft ist.

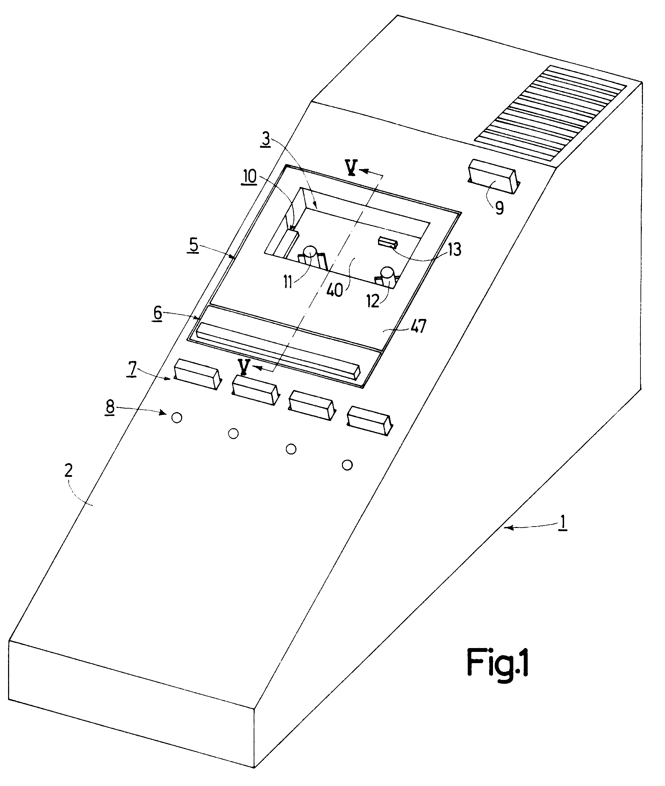

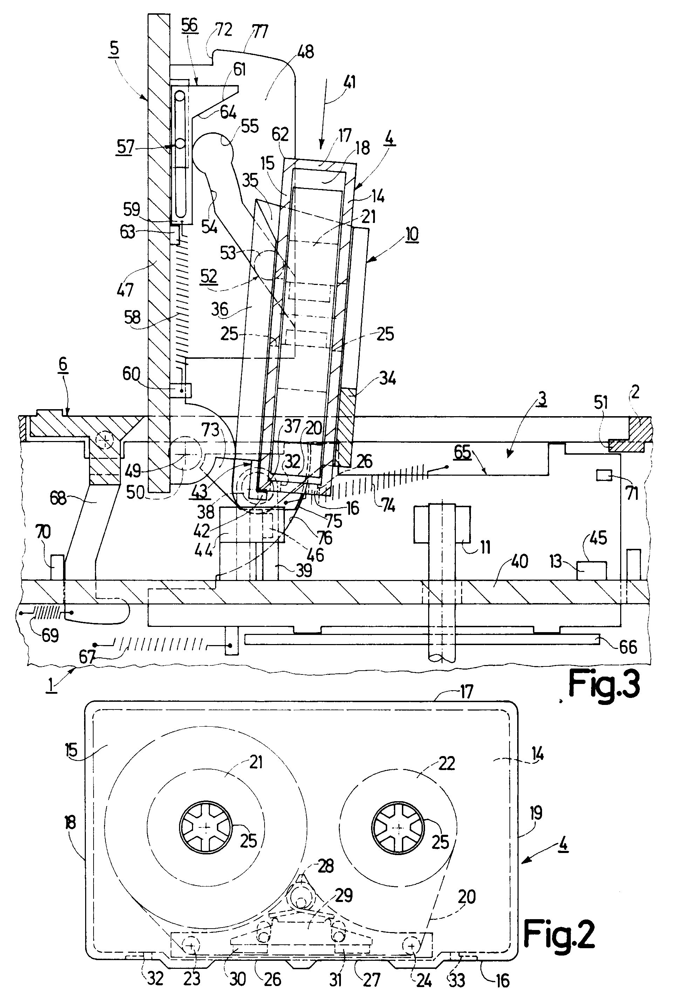

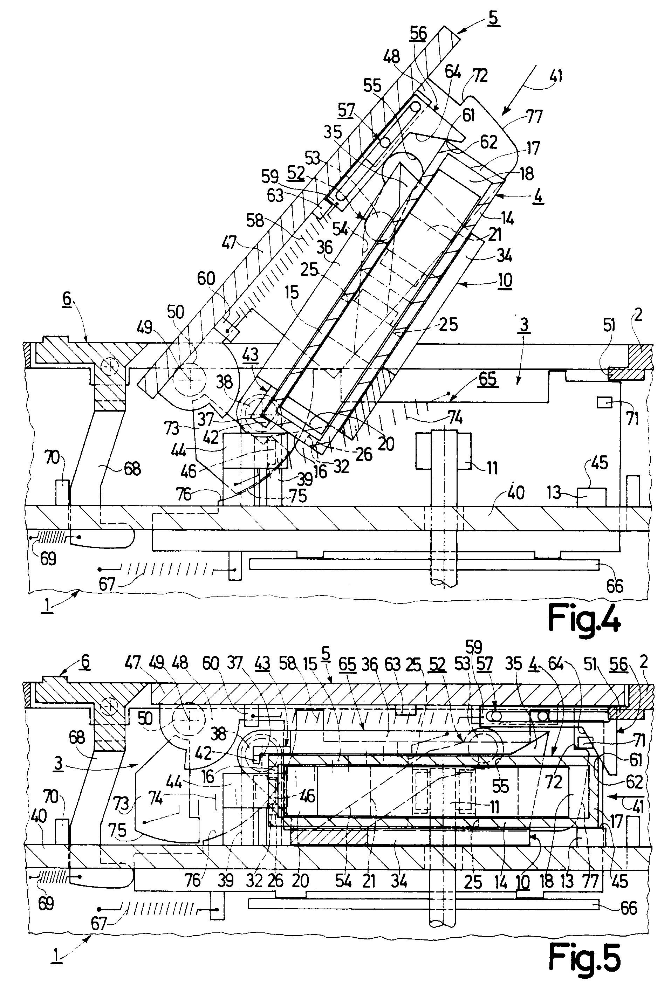

Die Erfindung wird im folgenden anhand der Zeichnungen näher beschrieben, in denen ein Ausführungsbeispiel der Erfindung dargestellt ist, auf das dieselbe jedoch nicht beschränkt sein soll. Die Fig.1 zeigt schematisch in einer Schrägansicht ein Aufzeichnungs- und Wiedergabegerät für einen in einer Kassette untergebrachten bandförmigen Aufzeichnungsträger, das zum Verschließen eines Aufnahmeraumes für eine Kassettenaufnahme einen verschwenkbaren Verschlußdeckel aufweist. Die Fig.2 zeigt in Draufsicht in etwa zweifacher Vergrößerung eine Kassette, die zum Aufzeichnen und Wiedergeben von Tonsignalen in das Gerät gemäß Figur 1 einsetzbar ist. Die Fig.3 zeigt in schematischer Weise entsprechend einem Schnitt gemäß der Linie V-V in Fig.1 in einem gegenüber Fig.1 vergrößerten Maßstab einen im Zusammenhang mit der vorliegenden Erfindung wesentlichen Teil des Gerätes gemäß Fig.1, wobei der Verschlußdeckel sich in seiner geöffneten Position befindet. Die Fig.4 zeigt analog wie die Fig.3 den erfindungswesentlichen Teil des Gerätes gemäß Fig.1, wobei der Verschlußdeckel sich in einer Zwischenposition zwischen seiner geöffneten und seiner geschlossenen Position befindet. Die Fig.5 zeigt analog wie die Figuren 3 und 4 in einem Schnitt gemäß der Linie V-V in Fig.1 den erfindungswesentlichen Teil des Gerätes gemäß Fig.1, wobei der Verschlußdeckel sich in seiner geschlossenen Position befindet.

Die Fig.1 zeigt ein Aufzeichnungs- und Wiedergabegerät 1, das zum Aufzeichnen und Wiedergeben von Sprachsignalen vorgesehen und als Tischdiktiergerät zu bezeichnen ist. Das Gerät 1 weist eine geneigt verlaufende Deckenwand 2 auf, in deren Bereich ein Aufnahmeraum 3 für eine Kassettenaufnahme zum Aufnehmen einer Kassette vorgesehen ist. Eine solche Kassette 4 ist in der Fig. 2 dargestellt. Zum Verschließen des Aufnahmeraumes 3 ist das Gerät 1 mit einem verschwenkbaren Verschlußdeckel 5 versehen. Zum Öffnen des Verschlußdeckels 5 weist das Gerät eine neben dem Verschlußdeckel angeordnete, sich über dessen gesamte Breite erstreckende verschwenkbare Drucktaste 6 auf. Weiters ist im Bereich der Deckenwand 2 ein Tastensatz 7 mit vier Drucktasten vorgesehen , mit denen gemäß Fig.1 von links nach rechts die Betriebsarten des Gerätes "Schneller Rücklauf", "Stop" , "Wiedergabe" und "Schneller Vorlauf" einschaltbar sind. Die Drucktasten des Tastensatzes 7 wirken je mit einem elektrischen Schaltkontakt zusammen, wobei jeder Schaltkontakt ein Schaltsignal an einen im Gerät 1 vorgesehenen Mikroprozessor abgibt, der seinerseits entsprechend den Schaltsignalen über von ihm angesteuerte Elektromagnete beziehungsweise Servomotore das Verstellen der erforderlichen Geräteteile zum Einschalten der gewünschten Betriebsart bewirkt. Da solche Maßnahmen bei derartigen Geräten bereits bekannt und im Zusammenhang mit der vorliegenden Erfindung nicht wesentlich sind, wird auf eine detaillierte Beschreibung derselben verzichtet. Zum Anzeigen, welche der vorgenannten Betriebsarten im Gerät 1 eingeschaltet ist, weist dasselbe einen Satz 8 von Leuchtdioden auf, die neben den Drucktasten angeordnet sind, wobei jede Leuchtdiode einer Drucktaste zugeordnet ist. Erwähnt sei, daß die Betriebsart "Aufnahme" von einem an das Gerät 1 anschließbaren Mikrofon her über den erwähnten Mikroprozessor einschaltbar ist, was der Einfachheit halber aber nicht dargestellt ist. Weiters ist im Bereich der Deckenwand 2 noch eine Drucktaste 9 vorgesehen, die zu betätigen ist, um das Gerät 1 überhaupt in Betrieb zu setzen.

Wie aus Fig.1 ersichtlich ist, weist der Verschlußdeckel 5 des Gerätes 1 einen durchsichtigen Bereich auf, durch den hindurch in den Aufnahmeraum 3 gesehen werden kann, wobei gemäß Fig.1 sich keine Kassette in dem Aufnahmeraum 3 befindet. Der Aufnahmeraum 3 beinhaltet eine verschwenkbare Kassettenaufnahme 10 zum Aufnehmen einer Kassette und zwei auf nicht näher dargestellte Weise motorisch antreibbare Wickeldorne 11 und 12 und einen stationären Anschlag 13 zum Unterstützen einer in eine Betriebslage gebrachten Kassette zu deren höhenmäßiger Positionierung.

Im folgenden ist kurz auf die in Fig.2 dargestellte quaderförmige Kassette 4 näher eingegangen, die als Diktierkassette seit langem bekannt ist. Die Kassette 4 weist ein quaderförmiges Gehäuse mit einer gemäß Fig.2 unten liegenden ersten Hauptwand 14, einer gemäß Fig.2 oben liegenden zweiten Hauptwand 15, einer gemäß Fig. 2 vorne liegenden langen ersten Seitenwand 16, einer gemäß Fig.2 hinten liegenden langen zweiten Seitenwand 17 und zwei kurzen Seitenwänden 18 und 19 auf. In der Kassette 4 ist ein magnetisierbarer, bandförmiger Aufzeichnungsträger 20, der im folgenden kurz Magnetband genannt ist, untergebracht. Zum Aufwickeln des Magnetbandes 20 sind in der Kassette 4 zwei nebeneinanderliegende, rotierende antreibbare Wickelkerne 21 und 22 drehbar gelagert. Das Magnetband 20 ist von dem einen Wickelkern 21 über eine Bandführung 23 längs der ersten Seitenwand 16 und eine weitere Bandführung 24 zu dem anderen Wickelkern 22 geführt. Da die Kassette 4 in bekannter Weise in zwei zueinander gewendeten Lagen in das Gerät 1 einsetzbar ist, sind die beiden Wickeldorne 11 und 12 zum Antreiben der Wickelkerne 21 und 22 durch beide Hauptwände 14 und 15 der Kassette hindurch mit den Wickelkernen 21 und 22 in Antriebsverbindung bringbar. Hiefür weist die Kassette 4 an jeder Hauptwand 14 bzw. 15 zwei zu den Wickelkernen 21 und 22 koaxiale Öffnungen auf, die der Einfachheit halber alle vier mit dem Bezugszeichen 25 bezeichnet sind. Im Bereich der ersten Seitenwand 16 weist die Kassette 4 zwei Öffnungen 26 und 27 auf, durch die hindurch je ein geräteseitiger Magnetkopf mit dem Magnetband 20 in Wirkverbindung bringbar ist. Zum Andrücken des Magnetbandes 20 an die Magnetköpfe sind in der Kassette 4 zwei auf einem verschiebbaren und verschwenkbaren, mit einer Schenkelfeder 28 belasteten Andruckfilzträger 29 befestigte Andruckfilze 30 und 31 vorgesehen. Weiters weist die Kassette 4 im Bereich ihrer ersten Seitenwand 16 zwei Positionieröffnungen 32 und 33 auf, in die je ein geräteseitiger stationärer Positionieranschlag einführbar ist, um die Kassette sowohl in ihrer Höhenlage als auch in ihrer Seitenlage gegenüber den Magnetköpfen zu positionieren.

Wie aus den Figuren 3 bis 5 ersichtlich ist, ist die Kassettenaufnahme 10 im wesentlichen schachtförmig ausgebildet und besteht aus einer U-förmig ausgebildeten Bodenwand 34, zwei von den Schenkeln der Bodenwand 34 abstehenden Seitenwänden 35 und zwei von den Seitenwänden 35 abstehenden, zueinander hin gerichteten Deckenleisten 36. Die Kassettenaufnahme 10 ist um eine Schwenkachse 37 verschwenkbar. Die Schwenkachse 37 ist durch zwei von den Seitenwänden 35 nach außen abstehende Lagerzapfen 38 festgelegt, die je in einem Lagerlappen 39 drehbar gelagert sind. Die beiden Lagerlappen 39 stehen von einer den Aufnahmeraum 3 begrenzenden Chassisplatte 40 ab. Die Kassettenaufnahme 10 und ihre Schwenklagerung sind bezüglich einer senkrecht zu ihrer Bodenwand 34 und in der Schachtrichtung, die in den Figuren 3 bis 5 mit einem Pfeil 41 angegeben ist, verlaufenden Ebene im wesentlichen spiegelsymmetrisch ausgebildet, wobei aufgrund der Schnittdarstellung in den Figuren 3 bis 5 nur eine Hälfte davon zu sehen ist. Die Kassettenaufnahme 10 ist zwischen einer in Fig.3 dargestellten Ladeposition und einer in Fig.5 dargestellten Betriebsposition verschwenkbar.

In der in Fig.3 dargestellten Ladeposition ist eine Kassette 4 mit der ersten Seitenwand 16 voran in Schachtrichtung 41 in die Kassettenaufnahme 10 bis in eine durch zwei an der Kassettenaufnahme vorgesehene Begrenzungsanschläge 42 festgelegte Einführlage einführbar. Die Begrenzungsanschläge 42 sind hiebei durch die kurzen Arme von zwei L-förmigen Winkeln 43 gebildet, deren lange Arme mit den Deckenleisten 36 der Kassettenaufnahme 10 verbunden sind und von diesen in Schachtrichtung 41 abstehen. In den Figuren 3 und 4 ist eine in die Kassettenaufnahme 10 eingeführte Kassette 4 in ihrer Einführlage befindlich dargestellt.

In der in Fig.5 dargestellten Betriebsposition der Kassettenaufnahme 10 nimmt eine in die Kassettenaufnahme eingeführte Kassette 4 eine Betriebslage ein, die aus Fig.5 ersichtlich ist. In dieser Betriebslage der Kassette stehen die Wickeldorne 11 und 12 durch die erste Hauptwand 14 der Kassette 4 hindurch mit den Wickelkernen 21 und 22 in Antriebsverbindung. Weiters stehen die Magnetköpfe des Gerätes 1, von denen in den Figuren 3 bis 5 nur ein Magnetkopf 44 zu sehen ist, durch die Öffnungen 26 und 27 in der ersten Seitenwand 16 der Kassette 4 hindurch mit dem Magnetband 20 in Kontakt, wobei das Magnetband 20 mit den Andruckfilzen 30 und 31 gegen die Magnetköpfe gedrückt wird. Die Magnetköpfe sind an der Chassisplatte 40 justierbar befestigt, was in den Figuren 3 bis 5 der Einfachheit halber nicht im Detail dargestellt ist. In der Betriebslage der Kassette 4 liegt dieselbe in dem Bereich der ersten Hauptwand 14, der an die der ersten Seitenwand 16 gegenüberliegende zweite Seitenwand 17 angrenzt, an dem an der Chassisplatte 40 des Gerätes vorgesehenen stationären Anschlag 13 an, dessen Deckfläche 45 eine Anschlagfläche für die Kassette 4 zur Höhenpositionierung derselben bildet, die in dem an die zweite Seitenwand 17 angrenzenden Bereich der ersten Hauptwand 14 an der Kassette 4 angreift. Weiters liegt die in ihrer Betriebslage befindliche Kassette 4 an zwei von der Chassisplatte 40 abstehenden, im Bereich der ersten Seitenwand 16 an der Kassette 4 angreifenden stationären Positionieranschlägen 46 an, wobei die Positionieranschläge 46 in die hiefür in der ersten Seitenwand 16 vorgesehenen Positionieröffnungen 32 und 33 eingeführt sind. Hiebei ist die Kassette 4 entgegen der Schachtrichtung 41 aus ihrer Einführlage in der Kassettenaufnahme 10 verstellt und dabei von den Begrenzungsanschlägen 42 an der Kassettenaufnahme 10 abgehoben in ihrer Betriebslage gehalten. Der Abstand zwischen der Einführlage und der Betriebslage der Kassette beträgt tatsächlich etwa 0,2mm; der Deutlichkeit halber ist dieser Abstand in Fig.5 etwas größer dargestellt.

Wie aus den Figuren 3 bis 5 weiters ersichtlich ist, ist der verschwenkbare Verschlußdeckel 5 im wesentlichen zu der der ersten Hauptwand 14 gegenüberliegenden zweiten Hauptwand 15 einer in die Kassettenaufnahme 10 eingeführten Kassette 4 benachbart angeordnet. Der Verschlußdeckel 5 ist im wesentlichen plattenförmig ausgebildet. Er besteht aus einer zum Verschließen des Aufnahmeraumes 3 vorgesehenen rechteckförmigen Deckenplatte 47 und zwei den Seitenwänden 35 der Kassettenaufnahme 10 gegenüberliegenden Seitenplatten 48. Der Verschlußdeckel 5 ist um eine Schwenkachse 49 verschwenkbar, die durch zwei von den Seitenplatten 48 nach außen abstehende Lagerzapfen 50 festgelegt ist, die in den Gehäusewänden des Gerätes 1 drehbar gelagert sind. Der Verschlußdeckel 5 und seine Schwenklagerung sind analog wie die Kassettenaufnahme 10 spiegelsymmetrisch ausgebildet, wobei aufgrund der Schnittdarstellung in den Figuren 3 bis 5 nur eine Hälfte davon zu sehen ist. Der Verschlußdeckel 5 ist zwischen einer in Fig.3 dargestellten geöffneten Position und einer in Fig.5 dargestellten geschlossenen Position verschwenkbar. Das Verschwenken in Richtung zur geschlossenen Position ist durch eine von der Deckenwand 2 des Gehäuses des Gerätes abstehende Anschlagleiste 51 begrenzt. Das Verschwenken in Richtung zur geöffneten Position ist durch einen aufgrund der Schnittdarstellung nicht gezeichneten Anschlag begrenzt.

Der Verschlußdeckel 5 ist mit der Kassettenaufnahme 10 zum gemeinsamen Verschwenken der beiden über zwei Kopplungseinrichtungen 52 gekoppelt. Die Kopplungseinrichtungen 52 sind auf besonders einfache Weise durch zwei Stift-Schlitz-Verbindungen gebildet. Die Stift-Schlitz-Verbindungen 52 weisen je einen von den Seitenwänden 35 der Kassettenaufnahme 10 nach außen abstehenden Stift 53 und je einen in den Seitenplatten 48 des Verschlußdeckels 5 vorgesehenen Schlitz 54 auf, in dem der Stift 53 mit geringem Spiel gleiten kann. Die Schlitze 54 weisen einen abgewinkelten Verlauf und an ihren geschlossenen Enden eine kreisförmige Erweiterung 55 auf, in der die Stifte 53 von den Schlitzen 54 freigestellt sind, so daß bei in den Erweiterungen 55 liegenden Stiften die Position der Kassettenaufnahme 10 relativ unabhängig von der Position des Verschlußdeckels 5 festlegbar ist. Die Stift-Schlitz-Verbindungen 52 sind durch die vorstehend angeführte Wahl des Verlaufes der Schlitze 54 so ausgebildet, daß der Verschlußdeckel 5 zwischen seiner geöffneten Position und seiner geschlossenen Position um einen Verschwenkbereich verschwenkbar ist, der unterschiedlich groß gegenüber dem Schwenkbereich der Kassettenaufnahme 10 zwischen ihrer Ladeposition und ihrer Betriebsposition ist. Bei vorliegendem Gerät ist der Schwenkbereich des Verschlußdeckels 5 größer als jener der Kassettenaufnahme 10, so daß der Verschlußdeckel in seiner geöffneten Position einen größeren Abstand von der Kassettenaufnahme einnimmt als in seiner geschlossenen Position. Die Kopplungseinrichtungen können auch anders ausgebildet sein, beispielsweise als Hebelmechanismus. Auch kann eine Kopplungseinrichtung lösbar ausgebildet sein und eine Anschlagfläche an der Kassettenaufnahme und eine weitere Anschlagfläche an dem Verschlußdeckel aufweisen, wobei die beiden Anschlagflächen beim Verschwenken des Verschlußdeckels in seine geschlossene Position und der Kassettenaufnahme in ihre Betriebsposition in gegenseitige Anlage kommen.

Der Verschlußdeckel 5 ist nicht nur zum Verschließen des Aufnahmeraumes 3 vorgesehen, sondern bildet zusätzlich einen zwischen einer Ausgangsposition und einer Arbeitsposition verschwenkbaren Träger für zwei an ihm spiegelsymmetrisch angeordnete verstellbare Andruckeinrichtungen 56, wobei die in Fig.3 dargestellte geöffnete Position des Verschlußdeckels der Ausgangsposition und die in Fig.5 dargestellte geschlossene Position des Verschlußdeckels der Arbeitsposition entspricht. Von den beiden Andruckeinrichtungen 56 ist in den Figuren 3 bis 5 aufgrund der Schnittdarstellung nur eine zu sehen. Jede Andruckeinrichtung 56 ist durch einen am Verschlußdeckel 5 senkrecht zu dessen Schwenkachse 49 mit einer Stift-Schlitz-Verbindung 57 verschiebbar geführten Andruckschieber gebildet. Die Andruckschieber können auch auf andere Weise verschiebbar geführt sein, beispielsweise mit in Führungsnuten gleitenden Führungsleisten. Jeder der beiden Andruckschieber 56 steht unter der Wirkung einer Zugfeder 58, die einerseits an einem Ende 59 des Andruckschiebers und andererseits an einem von der Deckenplatte 47 des Verschlußdeckels 5 abstehenden Fortsatz 60 angreift. An jedem Andruckschieber 56 ist eine Angriffsstelle 61 vorgesehen, mit der der Andruckschieber 56 an einer zu derselben korrespondierenden, im Bereich der der ersten Seitenwand 16 gegenüberliegenden zweiten Seitenwand 17 befindlichen Angriffsstelle 62 an der Kassette 4 angreift, wenn der Andruckschieber 56 mit der Kassette 4 in Wirkverbindung steht.

Wie aus Fig.3 ersichtlich ist, befinden sich die Andruckschieber 56 bei in ihrer Ladeposition befindlicher Kassettenaufnahme 10 und dabei in seiner geöffneten Position befindlichem Verschlußdeckel 5 infolge des größeren Schwenkbereiches des Verschlußdeckels außerhalb des Einführbereiches einer Kassette 4 in die Kassettenaufnahme 10. Hiebei nehmen die Andruckschieber 56 eine Ruhelage ein, in der sie sich unter der Wirkung der an ihnen angreifenden Zugfedern 58 je an einem am Verschlußdeckel 5 vorgesehenen Anschlag 63 abstützen.

Die Schwenkachse 49 des Verschlußdeckels 5 ist gegenüber der Schwenkachse 37 der Kassettenaufnahme 10 parallel versetzt angeordnet. Die Versetzung der Schwenkachsen 37 und 49 der Kassettenaufnahme 10 und des Verschlußdeckels 5 gegeneinander und die Ruhelage der Andruckschieber 56 an dem Verschlußdeckel 5 ist so gewählt, daß der Abstand der an jedem Andruckschieber 56 vorgesehenen Angriffsstelle 61 von der Schwenkachse 37 der Kassettenaufnahme 10 einerseits bei in ihrer Ladeposition befindlicher Kassettenaufnahme 10 und dabei in seiner geöffneten Position befindlichem Verschlußdeckel 5, wobei die Andruckschieber 56 sich in ihrer Ruhelage befinden, größer ist und andererseits bei in ihrer Betriebsposition befindlicher Kassettenaufnahme 10 ohne in sie eingeführter Kassette und dabei in seiner geschlossenen Position befindlichem Verschlußdeckel 5, wobei die Andruckschieber 56 sich ebenfalls in ihrer Ruhelage befinden, kleiner ist als der Abstand der zu der an jedem Andruckschieber 56 vorgesehenen Angriffsstelle 61 korrespondierenden, an der in die Kassettenaufnahme 10 eingeführten Kassette 4 befindlichen Angriffsstelle 62 von der Schwenkachse 37 der Kassettenaufnahme 10. Die Versetzung ist dabei, wie aus Fig.5 ersichtlich ist, bei vorliegendem Gerät so getroffen, daß bei in ihrer Betriebsposition befindlicher Kassettenaufnahme 10 und dabei in seiner geschlossenen Position befindlichem Verschlußdeckel 5 der Normalabstand der Schwenkachse 49 des Verschlußdeckels 5 von der zweiten Seitenwand 17 einer in die Kassettenaufnahme 10 eingeführten Kassette 4 größer ist als der Normalabstand der Schwenkachse 37 der Kassettenaufnahme 10 von der zweiten Seitenwand 17.

Beim gemeinsamen Verschwenken des Verschlußdeckels 5 von seiner geöffneten Position in seine geschlossene Position und der Kassettenaufnahme 10 von ihrer Ladeposition in ihre Betriebsposition bewegen sich zufolge der gewählten Versetzung ihrer beiden Schwenkachsen 49 und 37 gegeneinander die an den Andruckschiebern 56 vorgesehenen Angriffsstellen 61 am Beginn der Verstellbewegung kontinuierlich zu den an der in die Kassettenaufnahme eingeführten Kassette 4 befindlichen korrespondierenden Angriffsstellen 62 hin und kommen dabei an denselben in sanfter Weise zum Angreifen, wie dies in Fig.4 dargestellt ist. Es treten somit beim vorerwähnten Verschwenken des Verschlußdeckels 5 und der Kassettenaufnahme 10 die Andruckschieber 56 mit der eingeführten Kassette 4 in Wirkverbindung, wobei die eingeführte Kassette unter der Wirkung der an den Andruckschiebern 56 angreifenden Zugfedern 58, die nach dem Angreifen der Andruckschieber 56 an der Kassette 4 kontinuierlich zunehmend gespannt werden, in Schachtrichtung 41 zu den Begrenzungsanschlägen 42 hingedrückt wird. Auf diese Weise ist sichergestellt, daß eine Kassette 4 mit Sicherheit, auch wenn sie vom Benützer nicht ganz bis in ihre Einführlage in die Kassettenaufnahme 10 eingeführt wurde, von den Andruckschiebern 56 in ihre Einführlage gedrückt und darin gehalten wird. Wie aus Fig.4 ersichtlich ist, erfolgt das Hindrücken einer Kassette 4 zu den Begrenzungsanschlägen 42 bereits ab einem Zeitpunkt, zu dem die Wickeldorne 11 und 12 noch nicht in die Kassette 4 eintauchen, so daß bereits ab diesem Zeitpunkt die Kassette 4 mit den Andruckschiebern 56 sicher in ihre Einführlage in der Kassettenaufnahme 10 gedrückt und darin gehalten wird. Auf diese Weise ist erreicht, daß die Wickeldorne 11 und 12 mit Sicherheit ohne Störungen in die Kassette 4 eintauchen können. Infolge des kontinuierlichen Heranführens der Andruckschieber 56 an die Kassette 4 treten die Andruckschieber in sanfter Weise mit der Kassette 4 in Wirkverbindung, was im Hinblick auf einen geringen Verschleiß der Andruckschieber 56 und der Kassette 4 vorteilhaft ist. Durch das kontinuierlich zunehmende Spannen der Zugfedern 58, nachdem die Andruckschieber 56 mit der Kassette 4 in Wirkverbindung getreten sind, ist erreicht, daß für einen den Verschlußdeckel 5 händisch schließenden Benützer des Gerätes kein als störend empfundener abrupter Widerstand fühlbar ist und der Verschlußdeckel 5 ohne störende Rückwirkungen in seine geschlossene Position verstellbar ist.

Die an der in die Kassettenaufnahme 10 eingeführten Kassette 4 befindlichen korrespondierenden Angriffsstellen 62 liegen im wesentlichen den Positionieröffnungen 32 und 33 an der ersten Seitenwand 16 der Kassette 4 gegenüber. Wie aus den Figuren 4 und 5 ersichtlich ist, liegen die korrespondierenden Angriffsstellen 62 in dem Kantenbereich der Kassette 4, in den die der ersten Seitenwand 16 gegenüberliegende zweite Seitenwand 17 und die der ersten Hauptwand 14 gegenüberliegende zweite Hauptwand 15 mündet. Die an den Andruckschiebern 56 vorgesehenen Angriffsstellen 61 sind an einer gegenüber der in diesen Kantenbereich mündenden zweiten Seitenwand 17 und gegenüber der in diesen Kantenbereich mündenden zweiten Hauptwand 15 geneigt verlaufenden Angriffsfläche 64 der Andruckschieber 56 vorgesehen. Zufolge dieser Wahl der Angriffsstellen 61 und 62 ist erreicht, daß bei in seiner geschlossenen Position befindlichem Verschlußdeckel 5 die Andruckschieber 56 sowohl eine Kraftkomponente in der Schachtrichtung 41 als auch senkrecht zu der Schachtrichtung 41 auf die in ihrer Betriebslage befindliche Kassette ausüben. Auf diese Weise ist erreicht, daß bei in seiner geschlossenen Position befindlichem Verschlußdeckel 5 mit den Andruckschiebern 56 die hiebei in ihrer Betriebslage befindliche Kassette 4 an die beiden von der Chassisplatte 40 abstehenden, im Bereich der ersten Seitenwand 16 an der Kassette 4 angreifenden und dabei in die Positionieröffnungen 32 und 33 eingeführten stationären Positionieranschläge 46 angelegt gehalten ist, wobei, wie bereits erwähnt, die Kassette 4 entgegen der Schachtrichtung 41 aus ihrer Einführlage in der Kassettenaufnahme 10 verstellt und von den Begrenzungsanschlägen 42 an der Kassettenaufnahme 10 abgehoben in ihrer Betriebslage gehalten ist. Weiters ist auf diese Weise erreicht, daß bei in seiner geschlossenen Position befindlichem Verschlußdeckel 5 mit den Andruckschiebern 56 die in ihrer Betriebslage befindliche Kassette 4 in dem an die zweite Seitenwand 17 angrenzenden Bereich der ersten Hauptwand 14 an die an der Chassisplatte 40 des Gerätes 1 vorgesehene, im Bereich der ersten Hauptwand 14 an der Kassette 4 angreifende stationäre Auflagefläche 45 des Anschlages 13 angelegt gehalten ist. Durch das vorstehend erläuterte Andrücken der Kassette 4 an die Positionieranschläge 46 und an den Anschlag 13 ist die Kassette 4 sicher in ihrer Betriebslage exakt positioniert, wodurch ein einwandfreies Aufzeichnen und Wiedergeben von Sprachsignalen auf dem in der Kassette untergebrachten Magnetband mittels der Magnetköpfe gewährleistet ist.

Hinsichtlich der Versetzung der Schwenkachse 49 des Verschlußdeckels 5 und der Schwenkachse 37 der Kassettenaufnahme 10 gegeneinander ist noch zu erwähnen, daß bei vorliegendem Gerät die Versetzung der Schwenkachsen 49 und 37 gegeneinander so gewählt ist, daß die Schwenkachse 49 des Verschlußdeckels 5 einen größeren Normalabstand von der ersten Hauptwand 14 einer in die Kassettenaufnahme 10 eingeführten Kassette 4 als die an den Andruckschiebern 56 vorgesehenen Angriffsstellen 61 von der ersten Hauptwand 14 aufweist. Auf diese Weise ist erreicht, daß bei an der in die Kassettenaufnahme 10 eingeführten Kassette 4 angreifenden Andruckschiebern 56, wobei dieselben aus ihrer Ruhelage verstellt und die Zugfedern 58 gespannt sind, von der Kassette 4 auf die Andruckschieber 56 je eine Reaktionskraft ausgeübt wird, die an dem Verschlußdeckel 5 ein Drehmoment zur Folge haben, das bestrebt ist, den Verschlußdeckel 5 zu öffnen. Somit liefern die gespannten Zugfedern 58 eine Verstellkraft, die das Öffnen des Kassettendeckels 5 und das Verschwenken der Kassettenaufnahme 10 in ihre Ladeposition unterstützt.

Zum Festhalten des Verschlußdeckels 5 in seiner geschlossenen Position entgegen der auf ihn einwirkenden Verstellkräfte ist eine lösbare Festhalteeinrichtung 65 vorgesehen. Die Festhalteeinrichtung ist durch einen senkrecht zur Schwenkachse 49 des Verschlußdeckels 5 verstellbaren Verriegelungsschieber gebildet. Der Verriegelungsschieber 65 ist zwischen der Deckenwand 2 des Gehäuses des Gerätes und einer Führungsleiste 66 zwischen einer in den Figuren 3 und 4 dargestellten Freigabelage und einer in der Fig.5 dargestellten Verriegelungslage verschiebbar geführt, wobei der Verriegelungsschieber 65 unter der Wirkung einer an ihm angreifenden Zugfeder 67 in seine Verriegelungslage verstellbar ist. Zum Verstellen des Verriegelungsschiebers 65 aus seiner Verriegelungslage in seine Freigabelage und folglich zum Öffnen des Verschlußdeckels 5 dient die Drucktaste 6, die einen abgewinkelten Fortsatz 68 aufweist, an dem eine Rückstellfeder 69 angreift, die den Fortsatz 68 gegen einen von der Chassisplatte 40 abstehenden Anschlag 70 hält, und dessen freies Ende zum Zusammenwirken mit dem ihm gegenüberliegenden Ende des Verriegelungsschiebers 65 vorgesehen ist. Der Verriegelungsschieber 65 trägt im Bereich seines anderen Endes einen von ihm seitlich abstehenden Verriegelungsfortsatz 71, der bei in seiner geschlossenen Position befindlichem Verschlußdeckel 5 und in seiner Verriegelungslage befindlichem Verriegelungsschieber 65 eine Verriegelungsschulter 72 hintergreift, die an jener Seitenplatte 48 des Verschlußdeckels 5 vorgesehen ist, die in den Figuren 3 bis 5 zu sehen ist. Auf diese Weise wird der Verschlußdeckel 5 sicher in seiner geschlossenen Position festgehalten. Die Kassettenaufnahme 10 ist dabei dadurch sicher in ihrer Betriebsposition festgehalten, daß eine in die Kassettenaufnahme 10 eingeführte Kassette 4 von den am festgehaltenen Verschlußdeckel 5 angeordneten Andruckschiebern 56 gegen den Anschlag 13 niedergedrückt wird, wobei die Kassette 4 über die U-förmige Bodenwand 34 die Kassettenaufnahme 10 festhält. Wenn sich keine Kassette in der Kassettenaufnahme 10 befindet, dann wird die Kassettenaufnahme 10 bei geschlossenem Verschlußdeckel 5 von diesem über die Stift-Schlitz-Verbindungen 52 festgehalten, wobei sie dann aber aufgrund der kreisförmigen Erweiterungen 55 der Schlitze 54 sich nicht in ihrer Betriebsposition befindet, was aber in diesem Fall unerheblich ist. An dieser Stelle sei erwähnt, daß die Kassettenaufnahme 10 bei geöffnetem Verschlußdeckel 5 von diesem über die Stift-Schlitz-Verbindungen 52 in ihrer Ladeposition gemäß Fig.3 festgehalten wird.

An der von der Kassettenaufnahme 10 abgewandten Außenseite jener Seitenplatte 48 des Verschlußdeckels 5, die in den Figuren 3 bis 5 zu sehen ist, ist ein mit derselben verbundener, senkrecht zur Schwenkachse 49 des Verschlußdeckels 5 von demselben abstehender Lappen 73 vorgesehen, an dem eine Zugfeder 74 angreift, die dazu dient, den Verschlußdeckel 5 bis in seine vollständig geöffnete Position zu verstellen. Das freie Ende 75 des Lappens 73 weist einen kreisbogenförmigen, zur Schwenkachse 49 des Verschlußdeckels 5 koaxialen Verlauf auf. Der Verriegelungsschieber 65 weist eine zum kreisbogenförmigen Ende 75 des Lappens 73 korrespondierende kreisbogenförmige Steuerfläche 76 auf, über die bei in seiner geöffneten Position befindlichem Verschlußdeckel 5 und beim Verschwenken des Verschlußdeckels 5 in seine geschlossene Position der Verriegelungsschieber 65 von dem kreisbogenförmigen Ende 75 des Lappens 73 in seiner Freigabelage blockiert ist. Beim Verschwenken des Verschlußdeckels 5 in seine geschlossene Position tritt das kreisbogenförmige Ende 75 des Lappens 73 von der kreisbogenförmigen Steuerfläche 76 des Verriegelungsschiebers 65 erst vor Erreichen seiner geschlossenen Position außer Wirkverbindung und gibt den Verriegelungsschieber 65 zur Verstellung in seine Verriegelungsposition unter der Wirkung der Zugfeder 67 frei. Auf diese Weise ist erreicht, daß die Lage des Verriegelungsschiebers 65 und folglich die Funktion desselben in Abhängigkeit von der Position des Verschlußdeckels 5 gesteuert wird, so daß der Verriegelungsschieber 65 nur dann zur Wirkung kommen kann, wenn der Verschlußdeckel 5 in seine geschlossene Position verstellt ist. Weiters ist dadurch erreicht, daß bei aus seiner geschlossenen Position verstelltem Verschlußdeckel 5 der Verriegelungsschieber 65 in seiner Freigabelage verstellt gehalten bleibt, wobei der Verriegelungsschieber 65 in seiner Freigabelage zusätzlich zur Steuerung weiterer Geräteteile herangezogen werden kann, die beim Öffnen des Verschlußdeckels 5 außer Funktion gesetzt werden sollen und bei geöffnetem Verschlußdeckel außer Funktion gehalten bleiben sollen.

An jener Seitenplatte 48 des Verschlußdeckels 5, die in den Figuren 3 bis 5 zu sehen ist, ist eine in die Verriegelungsschulter 72 überleitende Anschlagfläche 77 vorgesehen, die einen kreisbogenförmigen, zur Schwenkachse 49 des Verschlußdeckels 5 koaxialen Verlauf aufweist. An dieser Anschlagfläche 77 stützt sich der Verriegelungsfortsatz 71 des Verriegelungsschiebers 65 unter der Wirkung der an dem Verriegelungsschieber angreifenden Zugfeder 67 ab, nachdem das kreisbogenförmige Ende 75 des Lappens 73 von der kreisbogenförmigen Steuerfläche 76 des Verriegelungsschiebers 65 vor Erreichen der geschlossenen Position des Verschlußdeckels 5 außer Wirkverbindung getreten ist. Auf diese Weise ist eine einwandfreie Funktion der durch den Verriegelungsschieber 65 gebildeten Festhalteeinrichtung gewährleistet, weil der Verriegelungsfortsatz 71 sicher von der Anschlagfläche 77 auf die sich daran anschließende Verriegelungsschulter 72 übergeführt wird.

## Patentansprüche

1. Aufzeichnungs- und/oder Wiedergabegerät 1 für einen bandförmigen Aufzeichnungsträger 20, der in einer in das Gerät 1 einsetzbaren Kassette 4 mit zwei nebeneinanderliegenden, rotierend antreibbaren Wickelkernen 21, 22 für denselben untergebracht ist, mit rotierend antreibbaren, durch mindestens eine erste Hauptwand 14 der Kassette 4 hindurch mit den Wickelkernen 21, 22 in Antriebsverbindung bringbaren Wickeldornen 11, 12 zum Antreiben der Wickelkerne 21, 22 und mit einer um eine Schwenkachse 37 verschwenkbaren, im wesentlichen schachtförmig ausgebildeten Kassettenaufnahme 10, die zwischen einer Ladeposition, in der eine Kassette 4 mit einer ersten Seitenwand 16 voran in Schachtrichtung 41 in die Kassettenaufnahme 10 bis in eine durch mindestens einen an der Kassettenaufnahme 10 vorgesehenen Begrenzungsanschlag 42 festgelegte Einführlage einführbar ist, und einer Betriebsposition verschwenkbar ist, in der eine in die Kassettenaufnahme 10 eingeführte Kassette 4 eine Betriebslage einnimmt, in der die Wickeldorne 11, 12 mit den Wickelkernen 21, 22 in Antriebsverbindung stehen, sowie mit mindestens einer unter der Wirkung einer Feder 58 stehenden Andruckeinrichtung 56, die bei in ihrer Ladeposition befindlicher Kassettenaufnahme 10 sich außerhalb des Einführbereiches einer Kassette 4 in die Kassettenaufnahme 10 befindet und die beim Verschwenken der Kassettenaufnahme 10 in ihre Betriebsposition mit einer in dieselbe eingeführten Kassette 4 in Wirkverbindung tritt, wobei die Andruckeinrichtung 56 mit mindestens einer an ihr vorgesehenen Angriffsstelle 61 an einer zu dieser korrespondierenden, im Bereich der der ersten Seitenwand 16 gegenüberliegenden Seitenwand 17 befindlichen Angriffsstelle 62 an der Kassette 4 angreift und die Kassette 4 unter der Wirkung der auf die Andruckeinrichtung 56 einwirkenden Feder 58 in Schachtrichtung 41 zu dem Begrenzungsanschlag 42 hindrückt, dadurch gekennzeichnet, daß die Andruckeinrichtung 56 an einem um eine Schwenkachse 49 zwischen einer Ausgangsposition und einer Arbeitsposition verschwenkbaren Träger 5 angeordnet ist, daß der Träger 5 mit der Kassettenaufnahme 10 zum zumindest teilweise gemeinsamen Verschwenken der beiden über mindestens eine Kopplungseinrichtung 52 gekoppelt ist und daß die Schwenkachse 49 des Trägers 5 gegenüber der Schwenkachse 37 der Kassettenaufnahme 10 parallel versetzt angeordnet ist, wobei der Abstand der an der Andruckeinrichtung 56 vorgesehenen Angriffsstelle 61 von der Schwenkachse 37 der Kassettenaufnahme 10 einerseits bei in ihrer Ladeposition befindlicher Kassettenaufnahme 10 und dabei in seiner Ausgangsposition befindlichem Träger 5 größer und andererseits bei in ihrer Betriebsposition befindlicher Kassettenaufnahme 10 ohne in sie eingeführter Kassette und dabei in seiner Arbeitsposition befindlichem Träger 5 kleiner ist als der Abstand der an einer in die Kassettenaufnahme 10 eingeführten Kassette 4 befindlichen korrespondierenden Angriffsstelle 62 von der Schwenkachse 37 der Kassettenaufnahme 10 und beim Verschwenken des Trägers 5 von seiner Ausgangsposition in seine Arbeitsposition die an der Andruckeinrichtung 56 vorgesehene Angriffsstelle 61 sich zu der an einer in die Kassettenaufnahme 10 eingeführten Kassette 4 befindlichen korrespondierenden Angriffsstelle 62 hin bewegt und dabei an derselben zum Angreifen kommt.

2. Gerät nach Anspruch 1, dadurch gekennzeichnet, daß der Träger 5 im wesentlichen zu der der ersten Hauptwand 14 gegenüberliegenden Hauptwand 15 einer in die Kassettenaufnahme 10 eingeführten Kassette 4 benachbart angeordnet ist (Fig. 3, 4, 5).

3. Gerät nach Anspruch 2, dadurch gekennzeichnet, daß der Träger 5 im wesentlichen plattenförmig ausgebildet ist und einen Verschlußdeckel für einen die Kassettenaufnahme 10 in ihrer Betriebsposition aufnehmenden Aufnahmeraum bildet (Fig. 3, 4, 5).

4. Gerät nach einem der vorhergehenden Ansprüche, dadurch gekennzeichnet, daß die Schwenkachse 49 des Trägers 5 einen größeren Normalabstand von der ersten Hauptwand 14 einer in die Kassettenaufnahme 10 eingeführten Kassette 4 als die an der Andruckeinrichtung 56 vorgesehene Angriffsstelle 61 aufweist und daß zum Festhalten des Trägers 5 in seiner Arbeitsposition eine lösbare Festhalteeinrichtung 65 vorgesehen ist (Fig. 3, 4, 5).

5. Gerät nach Anspruch 4, dadurch gekennzeichnet, daß die Festhalteeinrichtung 65 für den Träger 5 durch einen senkrecht zur Schwenkachse 49 des Trägers 5 verstellbaren Verriegelungsschieber gebildet ist, der unter der Wirkung einer Feder 67 in seine Verriegelungslage verstellbar ist (Fig. 3, 4, 5).

6. Gerät nach einem der vorhergehenden Ansprüche, dadurch gekennzeichnet, daß die Andruckeinrichtung 56 durch einen am Träger 5 senkrecht zu dessen Schwenkachse 49 verschiebbar geführten Andruckschieber gebildet ist (Fig. 3, 4, 5).

7. Gerät nach einem der vorhergehenden Ansprüche, dadurch gekennzeichnet, daß bei in seiner Arbeitsposition befindlichem Träger 5 mit der Andruckeinrichtung 56 eine in ihrer Betriebslage befindliche Kassette 4 an mindestens einen geräteseitigen, im Bereich der ersten Seitenwand 16 an der Kassette 4 angreifenden stationären Positionieranschlag 46 angelegt gehalten ist, wobei die Kassette 4 entgegen der Schachtrichtung 41 aus ihrer Einführlage in der Kassettenaufnahme 10 verstellt und dabei von dem Begrenzungsanschlag 42 an der Kassettenaufnahme 10 abgehoben in ihrer Betriebslage gehalten ist (Fig. 3, 4, 5).

8. Gerät nach einem der vorhergehenden Ansprüche, dadurch gekennzeichnet, daß die an einer in die Kassettenaufnahme 10 eingeführten Kassette 4 befindliche korrespondierende Angriffsstelle 62 in dem Kantenbereich der Kassette 4 liegt, in den die der ersten Seitenwand 16 gegenüberliegende Seitenwand 17 und die der ersten Hauptwand 14 gegenüberliegende Hauptwand 15 mündet, und daß die an der Andruckeinrichtung 56 vorgesehene Angriffsstelle 61 an einer gegenüber der in diesen Kantenbereich mündenden Seitenwand 17 und gegenüber der in diesen Kantenbereich mündenden Hauptwand 15 geneigt verlaufenden Angriffsfläche 64 der Andruckeinrichtung 56 vorgesehen ist und daß bei in seiner Arbeitsposition befindlichem Träger 5 mit der Andruckeinrichtung 56 eine in ihrer Betriebslage befindliche Kassette 4 in dem an die der ersten Seitenwand 16 gegenüberliegende Seitenwand 17 angrenzenden Bereich ihrer ersten Hauptwand 14 an mindestens eine geräteseitige stationäre Auflagefläche 45 angelegt gehalten ist (Fig. 3, 4, 5).

## Claims

1. A recording and/or reproducing apparatus 1 for a record carrier 20 in the form of a tape accommodated in a cassette 1 which can be inserted into the apparatus 1 and which comprises two juxtaposed rotatably drivable reel hubs 21, 22 for said record carrier, which apparatus comprises rotatably drivable reel spindles 11, 12, which are engageable with the reel hubs 21, 22 through at least a first main wall 14 of the cassette 4 to drive the reel hubs 21, 22, a substantially tray-shaped cassette holder 10 which is pivotable about a pivotal axis 37 between a loading position, in which a cassette 4 can be inserted into the cassette holder 10 with a first side wall 16 facing forward in the insertion direction 41 up to an insertion position defined by at least one limiting stop 42 provided on the cassette holder 10, and an operating position, in which a cassette 4 inserted into the cassette holder 10 occupies an operating position in which the reel spindles 11, 12 engage with the reel hubs 21, 22, and at least one pressure device 56 which is loaded by a spring 58, which pressure device is situated outside the area of insertion of a cassette 4 into the cassette holder 10 when the cassette holder 10 is in its loading position, and enters into cooperation with a cassette 4 inserted into the cassette holder 10 when said holder is pivoted into its operating position, the pressure device 56 having at least one contact point 61 with which it acts upon a contact point 62 provided on the cassette 4 in the area of the side wall 17 opposite the first side wall 16 and corresponding to the first-mentioned contact point, to press the cassette 4 in the insertion direction 41 towards the limiting stop 42 under the influence of the spring 58 acting on the pressure device 56, characterised in that the pressure device 56 is arranged on a support 5 which is pivotable about a pivotal axis 49 between an initial position and an operational position, the support 5 is coupled to the cassette holder 10 *via* at least one coupling device 52 for the at least partly common pivotal movement of said support and said holder, and the pivotal axis 49 of the support 5 is in a spaced-apart parallel relationship to the pivotal axis 37 of the cassette holder 10, the distance from the contact point 61 on the pressure device 37 to the pivotal axis 37 of the cassette holder 10 while the cassette holder 10 is in its loading position and the support 5 is in its initial position being larger than and, conversely, while the cassette holder 10 is in its operating position without a cassette and the support 5 is in its operational position being smaller than the distance from the corresponding contact point 62 on a cassette 4 in the cassette holder 10 to the pivotal axis 37 of the cassette holder 10, and the contact contact point 61 on the pressure device 56 being moved towards and engaging with the corresponding contact point 62 on a cassette 4 situated in the cassette holder 10 when the support 5 is pivoted from its initial position into its operational position.

2. An apparatus as claimed in Claim 1, characterised in that the support 5 is arranged substantially adjacent the main wall 15 opposite the first main wall 14 of a cassette 4 inserted into the cassette holder 10 (Figs. 3, 4, 5).

3. An apparatus as claimed in Claim 2, characterised in that the support 5 is substantially plate-shaped and forms a cover for a compartment which receives the cassette holder 10 in its operating position (Figs. 3, 4, 5).

4. An apparatus as claimed in any one of the preceding Claims, characterised in that the pivotal axis 49 of the support 5 has a larger normal distance from the first main wall 14 of a cassette 4 situated in the cassette holder 10 than the contact point 61 on the pressure device 56, and a disengageable latching device 65 has been provided to latch the support 5 in its operational position (Figs. 3, 4, 5).

5. An apparatus as claimed in Claim 4, characterised in that the latching device 65 for the support 5 is formed by a latching slide which is movable perpendicularly to the pivotal axis 49 of the support 5, which latching slide is movable into its latched position under the influence of a spring 67 (Figs. 3, 4, 5).

6. An apparatus as claimed in any one of the preceding Claims, characterised in that the pressure device 56 is formed by a pressure slide which is guided on the support 5 so as to be movable perpendicularly to the pivotal axis 49 of said support (Figs. 3, 4, 5).

7. An apparatus as claimed in any one of the preceding Claims, characterised in that with the support 5 in its operational position the pressure device 56 holds a cassette 4 in its operating position against at least one stationary positioning stop 46 on the apparatus, which stop engages with the cassette 4 in the area of the first side wall 16, the cassette 4 being moved out of its insertion position in the cassette holder 10 in a direction opposite to the insertion direction 41 and being held in its operating position, lifted off the limiting stop 42 on the cassette holder 10 (Figs. 3, 4, 5).

8. An apparatus as claimed in any one of the preceding Claims, characterised in that the corresponding contact point 62 on a cassette 4 present in the cassette holder 4 is situated in the edge area of the cassette 4 where the side wall 17 opposite the first side wall 16 and the main wall 15 opposite the first main wall 14 adjoin one another, the contact point 61 on the pressure device 56 is arranged on a contact surface 64 of the pressure device 56, which surface is inclined relative to the side wall 17 and the main wall 15 which adjoin one another in said edge area, and when the support 5 is in its operational position the pressure device 56 holds a cassette 4 in its operating position positioned against at least one stationary contact surface 45 on the apparatus in the area of its first main wall 14 which adjoins the side wall 17 opposite the first side wall 16 (Figs. 3, 4, 5).

## Revendications

1. Appareil d'enregistrement et/ou de reproduction (1) pour un support d'enregistrement en forme de bande (20) qui est logé dans une cassette (4) pouvant être introduite dans l'appareil (1) et comportant deux noyaux de bobines (21, 22) pour la bande, pouvant être entraînés en rotation et disposés côte à côte, comprenant des mandrins de bobinage (11, 12) pouvant être entraînés en rotation et être amenés en liaison d'entraînement avec les noyaux de bobines (21, 22), à travers au moins une première paroi principale (14) de la cassette (4), en vue d'entraîner les noyaux de bobines (21, 22), et comprenant un porte-cassette (10) en substance en forme de couloir pouvant pivoter autour d'un axe de pivotement (37), le pivotement pouvant s'effectuer entre une position de chargement dans laquelle une cassette (4) peut être introduite, par une première paroi latérale (16) en avant, dans le sens de la flèche (41) dans le porte-cassette (10), jusque dans une position d'introduction fixée par au moins une butée de limitation (42) prévue sur le porte-cassette (10), et une position de fonctionnement dans laquelle une cassette (4) introduite dans le porte-cassette (10) occupe une situation de fonctionnement dans laquelle les mandrins de bobinage (11, 12) sont en liaison d'entraînement avec les noyaux de bobines (21, 22), ainsi qu'au moins un dispositif de pression (56) soumis à l'action d'un ressort (58), qui, lorsque le porte-cassette (10) se trouve dans sa position de chargement, est situé en dehors de la zone d'introduction d'une cassette (4) dans le porte-cassette (10) et qui, lorsque le porte-cassette (10) pivote dans sa position de fonctionnement, entre en liaison active avec une cassette (4) introduite dans ce porte-cassette, de sorte que le dispositif de pression (56) attaque, par au moins un endroit d'attaque (61) prévu sur lui-même, un endroit d'attaque (62) correspondant sur la cassette, situé dans la zone de la paroi latérale (17) opposée à la première paroi latérale (16), et refoule la cassette (4) sous l'influence du ressort (58) agissant sur le dispositif de pression (56), dans le sens de la flèche (41), vers la butée de limitation (42), caractérisé en ce que le dispositif de pression (56) est monté sur un support (5) pouvant pivoter autour d'un axe de pivotement (49) entre une position de départ et une position de travail, que le support (5) est accouplé au porte-cassette (10) en vue de leur pivotement, au moins en partie conjoint, par l'intermédiaire d'au moins un dispositif d'accouplement (52) et que l'axe de pivotement (49) du support (5) est décalé parallèlement par rapport à l'axe de pivotement (37) du porte-cassette (10), de sorte que la distance de l'endroit d'attaque (61) prévu sur le dispositif de pression (56) par rapport à l'axe de pivotement (37) du porte-cassette (10), d'une part, lorsque le porte-cassette (10) se trouve dans sa position de chargement et que le support (5) se trouve dès lors dans sa position de départ, est plus grande et, d'autre part, lorsque le porte-cassette (10) se trouve dans sa position de fonctionnement sans contenir de cassette introduite et que le support (5) est dès lors dans sa position de travail, est plus petite que la distance de l'endroit d'attaque (62) correspondant prévu sur une cassette (4) introduite dans le porte-cassette (10) par rapport à l'axe de pivotement (37) du porte-cassette (10) et, lors du pivotement du support (5) de sa position de départ vers sa position de travail, l'endroit d'attaque (61) prévu sur le dispositif de pression (56) se déplace vers l'endroit d'attaque (62) correspondant prévu sur une cassette (4) introduite dans le porte-cassette (10) et vient alors en contact avec celui-ci.

2. Appareil suivant la revendication 1, caractérisé en ce que le support (5) est monté (Fig. 3, 4, 5) à proximité en substance de la paroi principale (15) d'une cassette (4) introduite dans le porte-cassette (10) opposée à la première paroi principale (14).

3. Appareil suivant la revendication 2, caractérisé en ce que le support (5) a essentiellement la forme d'une plaque et forme un couvercle de fermeture pour un compartiment (Fig. 3, 4, 5) recevant le porte-cassette (10) dans sa position de fonctionnement.

4. Appareil suivant l'une quelconque des revendications précédentes, caractérisé en ce que l'axe de pivotement (49) du support (5) est séparé d'une plus grande distance normale de la première paroi principale (14) d'une cassette (4) introduite dans le porte-cassette (10) que l'endroit d'attaque (61) prévu sur le dispositif de pression (56) et que, pour retenir le support (5) dans sa position de travail, un dispositif de retenue libérable (65) est prévu (Fig. 3, 4, 5).

5. Appareil suivant la revendication 4, caractérisé en ce que le dispositif de retenue (65) pour le support (5) est formé par un coulisseau de verrouillage déplaçable perpendiculairement à l'axe de pivotement (49) du support (5), qui peut être déplacé dans sa position de verrouillage (Fig. 3, 4, 5) sous la sollicitation d'un ressort (67).

6. Appareil suivant l'une quelconque des revendications précédentes, caractérisé en ce que le dispositif de pression (56) est formé (Fig. 3, 4, 5) par un coulisseau de pression guidé à coulissement sur le support (5) perpendiculairement à son axe de pivotement (49).

7. Appareil suivant l'une quelconque des revendications précédentes, caractérisé en ce que, lorsque le support (5) se trouve dans sa position de travail, une cassette (4) se trouvant dans sa position de fonctionnement est maintenue appliquée par le dispositif de pression (56) contre au moins une butée de positionnement fixe (46), située du côté de l'appareil, attaquant la cassette (4) dans la zone de la première paroi latérale (16), de sorte que la cassette (4) est déplacée dans le sens opposé à celui de son introduction (41) à partir de sa position d'introduction dans le porte-cassette (10) et est ainsi maintenue dans sa position de fonctionnement, écartée de la butée de limitation (42) sur le porte-cassette (10) (Fig. 3, 4, 5).

8. Appareil suivant l'une quelconque des revendications précédentes, caractérisé en ce que l'endroit d'attaque (62), correspondant, situé sur une cassette (4) introduite dans le porte-cassette (10) se trouve dans la zone des bords de la cassette (4) dans laquelle la paroi latérale (17) opposée à la première paroi latérale (16) et la paroi principale (15) opposée à la première paroi principale (14) se rencontrent, et que l'endroit d'attaque (61) situé sur le dispositif de pression (56) est prévu sur une surface d'attaque (64) du dispositif de pression (56) s'étendant obliquement par rapport à la paroi latérale (17) débouchant dans cette zone de bords et par rapport à la paroi principale (15) débouchant dans cette zone de bords et que, dans le cas où le support (5) se trouve dans sa position de travail, une cassette (4) se trouvant dans sa position de fonctionnement est maintenue par le dispositif de pression (56) (Fig. 3, 4, 5) appliquée, dans la zone de sa première paroi principale (14) adjacente à la paroi latérale (17) opposée à la première paroi latérale (16), au moins contre une surface d'appui fixe (45) située du côté de l'appareil.
